**Europäisches Patentamt**

**European Patent Office**

**Office européen des brevets**

(19)

(11) Veröffentlichungsnummer : **0 121 928 B2**

# (12) NEUE EUROPÄISCHE PATENTSCHRIFT

(45) Veröffentlichungstag der neuen Patentschrift :
**13.05.92 Patentblatt 92/20**

(51) Int. Cl.⁵ : **H04N 1/04,** G03B 27/54

(21) Anmeldenummer : **84103959.7**

(22) Anmeldetag : **09.04.84**

(54) **Beleuchtungseinrichtung für einen elektrooptischen Abtaster.**

(30) Priorität : **12.04.83 DE 3313186**

(43) Veröffentlichungstag der Anmeldung :
**17.10.84 Patentblatt 84/42**

(45) Bekanntmachung des Hinweises auf die
Patenterteilung :
**30.08.89 Patentblatt 89/35**

(45) Bekanntmachung des Hinweises auf die
Entscheidung über den Einspruch :
**13.05.92 Patentblatt 92/20**

(84) Benannte Vertragsstaaten :
**AT BE CH DE FR GB IT LI LU NL SE**

(56) Entgegenhaltungen :
**FR-A- 2 443 020**

(56) Entgegenhaltungen :
**GB-A- 2 020 000
PATENT ABSTRACTS OF JAPAN, Band 5, Nr.
121 (E-68)[793], 5. August 1981 & JP-A-56 058
364**

(73) Patentinhaber : **COMPUTER GESELLSCHAFT
KONSTANZ MBH
Max-Stromeyer-Strasse 116
W-7750 Konstanz (DE)**

(72) Erfinder : **Dowe, Dietmar
Blütenhang 20
W-7768 Stockach-Wahlwies (DE)**
Erfinder : **Haupt, Gerhard
Mittelweg 38
W-7750 Konstanz (DE)**

(74) Vertreter : **Mehl, Ernst, Dipl.-Ing. et al
Postfach 22 13 17
W-8000 München 22 (DE)**

EP 0 121 928 B2

**Beschreibung**

Die Erfindung betrifft eine Beleuchtungseinrichtung für einen elektrooptischen Abtaster nach dem Oberbegriff des Anspruchs 1.

Beleuchtungseinrichtungen zur Erzielung gleichmäßiger Helligkeit auf langgestreckten Objekten werden beispielsweise verwendet bei Kopiergeräten, bei Abtastgeräten zur optischen Zeichenerkennung bzw. Markierungserkennung, bei Faksimile-, Telefax- und Bildfunk-Geräten, bei Geräten zur Zeichnungsdigitalisierung sowie bei Abtasteinrichtungen zur Erkennung von Fertigungsfehlern in Papier- oder Textilbahnen oder dergleichen. Derartigen Beleuchtungseinrichtungen fällt dabei die Aufgabe zu, das jeweilige Objekt, insbsondere ein langgestrecktes flaches Objekt so auszuleuchten, daß der Reflektionsfaktor-Verlauf des Objekts möglichst unverfälscht als Helligkeitsverlauf im Bild wiedergegeben wird. Diese Bedingungen sollen insbesondere auch dann eingehalten werden, wenn reale Abbildungsoptiken verwendet werden, die den Helligkeitsverlauf des Bildes verfälschen (vgl. z. B. G. Schröder : Technische Optik, Vogel-Verlag, 1974, Seite 76). Außerdem soll sichergestellt werden, daß glänzende dunkle Objektstellen nicht als helle Stellen erscheinen und daß kleine Unebenheiten des Gegenstandes, z. B. die Faserstrukturen bei Papier, möglichst wenig Schatten werfen.

Für derartige Beleuchtungseinrichtungen sind bereits verschiedene Lösungsmöglichkeiten aufgezeigt wordenen. So ist es beispielsweise grundsätzlich möglich, eine frei und diffus strahlende Lampe zu verwenden, die zwar einerseits einen guten Helligkeitsverlauf im Bild ergibt, die aber andererseits bei schlechtem Wirkungsgrad keine schattenfreie Ausleuchtung ermöglicht.

Aus der europäischen Patentanmeldung EP-A1-0 046172 ist eine Beleuchtungseinrichtung für einen Belegabtaster bekannt, bei der im Strahlengang zwischen Lampe und Objekt ein Lichtleiter aus Glas, Acrylglas oder dergleichen vorgesehen ist. Ebenso wie bei den z. B. aus G. Schröder: Technische Optik, Vogel-Verlag 1974, Seite 99 bekannten Lichtleitereinrichtungen in Form sogenannter faseroptischer Querschnittswandler erfordern derartig ausgebildete Beleuchtungseinrichtungen einen beträchtlichen Aufwand.

Schließlich ist aus der US-A 4186 431 eine Beleuchtungseirichtung bekannt, bei der das Licht einer im Inneren eines Zylinderspiegels angeordneten Lichtquelle über einen Längsspalt im Zylinderspiegel austritt und mit einer bündelnden Optik auf das Objekt projiziert wird. Da bei einer derartigen Beleuchtungseinrichtung die Gefahr besteht, daß der eigentliche Leuchtkörper, z. B. die Lampenwendel, als Bild in der Objektebene erscheint und sich dort der Struktur des Objekts störend überlagert, wird bewußt eine unscharfe Abbildung z. B. durch eine Scharfeinstellung auf Unendlich bei demgegenüber kleiner Entfernung zum Gegenstand gewählt. Nachteilig ist hier vor allem die Notwendigkeit einer sehr genauen Einstellung der Lampenlage in Bezug auf die Beleuchtungsoptik. Eine andere Korrekturmöglichkeit besteht in der Einfügung von Matt- oder Streuscheiben oder dergleichen im Strahlengang, was jedoch neben dem zusätzlichen Aufwand eine Verringerung des Wirkungsgrades zur Folge hat.

Der vorliegenden Erfindung liegt nun die Aufgabe zugrunde, eine Beleuchtungseinrichtung der eingangs genannten Art in der Weise zu verbessem, daß sie den gestellten Anforderungen, insbesondere in bezug auf einen unverfälschten Helligkeitsverlauf und eine schattenfreie Ausleuchtung des Objekts unter Berücksichtigung verschiedener Störfaktoren auf möglichst einfachem Wege und dementsprechend geringem Aufwand weitgehend gerecht wird.

Die Lösung dieser Aufgabe ergibt sich erfindungsgemäß durch die kennzeichnenden Merkmale des Patentanspruchs 1.

Vorteilhafte Weiterbildungen der Erfindung sind in den Unteransprüchen angegeben.

Die Vorteile der Erfindung bestehen vor allem in einer verbesserten schattenfreien Ausleuchtung und in einer relativen Unempfindlichkeit gegenüber Ungenauigkeiten der Lampenlage, letzteres insbesondere aufgrund der Tatsache, daß im Strahlengang der Lichtquelle keine abbildenden, d. h. lichtbündelnden Elemente vorgesehen sind.

Im folgenden wird ein Ausführungsbeispiel der Erfindung anhand der Zeichnung näher erläutert.

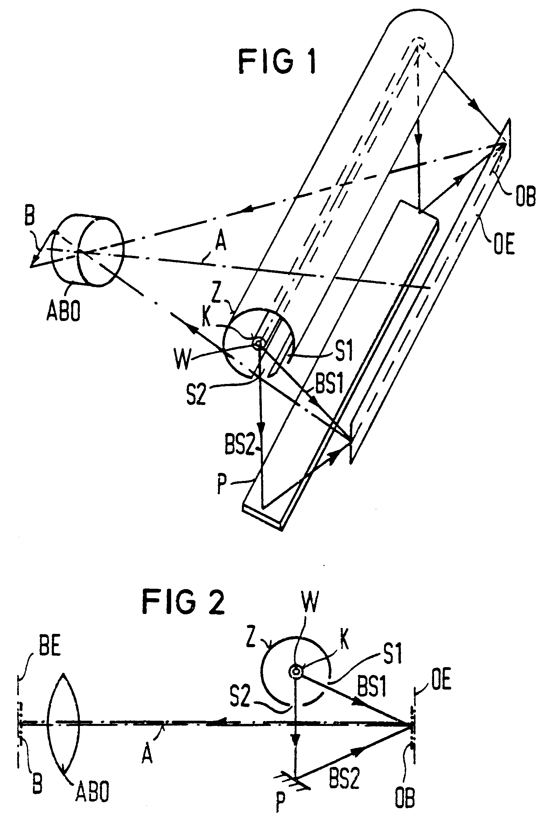

Die Figuren 1 und 2 zeigen in perspektivischer Darstellung bzw. in schematischer Seitenansicht das Prinzip einer Beleuchtungseinrichtung, bei der die Beleuchtungsstrahlen zwischen Lichtquelle L und Objektebene OE mit durchgezogenen Linien und die Abbildungsstrahlen zwischen Objektebene OE und Bildebene BE in strichpunktierten Linien dargestellt sind. Mit A ist die optische Achse der Abtastoptik ABO bezeichnet, die im Strahlengang zwischen Objektebene OE und Bildebene BE angeordnet ist und die das Objekt OB als Bild B in die Bildebene BE projiziert. Die Lichtquelle L besteht im dargestellten Beispiel aus einer im Inneren eines zylindrischen Lampenkolbens K angeordneten Lampenwendel W, die sich über die gesamte Länge des Lampenkolbens K erstreckt. Der Lampenkolben K befindet sich seinerseits im Inneren des Zylinderspiegels Z und ist koaxial zu dessen Achse angeordnet. Zweckmäßig besteht der Zylinderspiegel Z aus zwei aufklappbaren Teilschalen, sodaß die Lampe leichter eingesetzt bzw. ausgewechselt werden kann. Der Zylinderspiegel Z weist ferner einen ersten Längsspalt S1 auf, der in bezug auf die Objektebene OE so angeordnet ist, daß die durch

2

diesen ersten Längsspalt S1 austretenden Beleuchtungsstrahlen BS1 direkt auf das Objekt OB treffen. Der Zylinderspiegel Z weist darüber hinaus einen zweiten Längsspalt S2 auf, wobei die dort austretenden Beleuchtungsstrahlen BS2 an einem Planspiegel P reflektiert werden. Der zweite Längsspalt S2 und der Planspiegel P sind in bezug auf die Objektebene OE so einander zugeordnet, daß die am Planspiegel P reflektierten Beleuchtungsstahlen BS2 in der Objektebene OE mit den direkt einfallen Beleuchtungsstrahlen BS1 zusammentreffen. Der BeleuchtungsstärkeAbfall zum Bildrand, der bei realen Abbildungsoptiken auftritt, kann bei Glühlampen in bekannter Weise kompensiert werden, indem die langgestreckte-Wendel in einzelne Segmente von passend gewählter Größe und Anordnung aufgeteilt wird. Wahlweise kann auch die Breite der Längsspalte S1 und S2 zum Rand hin vergrößert werden, sodaß auch unsegmentierte Glühlampen und Leuchtstofflampen für kompensierende Beleuchtung verwendet werden können. Auf diese Weise ist eine objektiv-kompensierende schattenarme Ausleuchtung und glanzfreie Abtastung über die gesamte Länge des Objekts, beispielsweise einer Zeichenzeile auf einem Beleg, erreichbar. Die speziell bei der optischen Zeichenerkennung ins Gewicht fallenden Störfaktoren, die auf eine ungleichmäßige Papierstruktur und auf Glanzstellen im Bereich der gedruckten oder geschriebenen Zeichen zurückzuführen sind, können damit weitgehend eliminiert werden. Insbesondere durch die Faserstruktur des Papiers und durch die auf dem Papier vorhandenen Prägungen infolge des Druck- und Schreibvorgangs oder bedingt durch Faltungen usw., kann es zu erheblichen Störungen kommen, weil die dabei entstehenden Schatten im Abtastsignal als dunkle Stellen auftreten. Die grundsätzliche Möglichkeit, den Schattenwurf durch eine Beleuchtung und Abtastung in gleicher Richtung zu vermeiden, verbietet sich aus zwei Gründen. Bei senkrechter Beleuchtungs- und Abtast-Richtung würden nämlich glänzende Druckfarben zu hell gesehen, d. h. praktisch unsichtbar werden, während bei schräger Beleuchtungs- und Abtast-Richtung die Zeichen für den Abtaster perspektivisch verzerrt erscheinen. Durch die beim gezeigten Ausführungsbeispiel vorgesehene Ausleuchtung des Objekts aus zwei verschiedenen schrägen Richtungen - z. B. einmal schräg von oben und einmal schräg von unten - werden dagegen ggf. auftretende Schatten so aufgehellt, daß sie nicht mehr störend in Erscheinung treten. Das Licht muß dabei jeweils so auf das Objekt treffen, daß ein spiegelndes Objekt das Licht nicht in das Objektiv spiegelt Anstelle zweier Lampen wird zweckmäßig nur eine einzige Lichtquelle verwendet, deren Strahlen über zwei Längsspalte S1 und S2 austreten und einmal direkt und einmal über eine Reflexion am Planspiegel P gemeinsam auf die Objektebene OE treffen. Die beiden Längsspalte S1 und S2 können durch wärmerefiektierende Filter verschlossen werden, wobei es besonders vorteilhaft ist, wenn diese Filter als in der Mantelfläche des Zylinderspiegels Z verlaufende Fiterschichten ausgebildet sind. Darüber hinaus besteht die Möglichkeit, sowohl die Spiegelschicht des Zylinderspiegels Z als auch die wärmereflektierenden Filterschichten unmittelbar auf die Mantelfläche des Lampenkolbens K aufzutragen. Bei der dargestellten Ausführungsform mit Zylinderspiegel Z und Lampenkolben K wird zweckmäßig anstelle einer regulär reflektierenden Spiegelschicht für den Zylinderspiegel Z eine diffus reflektierende (mattweiß) oder eine retroreflektierende, z. B. glasperlenhaltige Schicht verwendet werden, weil dadurch die Anforderungen an die Einbaugenauigkeit der Lampe in bezug auf ihre Lage im Zylinder reduziert werden können.

Wie aus dem in der Zeichnung dargestellten Ausführungsbeispiel ersichtlich, durchquert das Licht von der Lampenwendel W zum Objekt OB keine abbildenden, d. h. lichtbündelnden Elemente. Dies hat den Vorteil, daß Änderungen der geometrischen Lage der Lampe nur einen sehr geringen Einfluß auf die Verteilung der Beleuchtungsstärke längs des Gegenstandes haben. Bei Verwendung lichtbündelnder Elemente im Strahlengang zwischen Wendel W und Objektfläche OE ergäbe sich nämlich ein mehr oder weniger scharfes Wendelbild in der Objektebene OE, so daß bereits geringe Lageänderungen der Wendel die Lichtverteilung verderben würden.

Zwar ergibt sich auch durch den Zylinderspiegel Z eine fokussierende Wirkung; weshalb ideale Verhältnisse nur dann herrschen, wenn die Wendel exakt in der Zylinderachse verläuft, weil andererseits d. h. bei exentrischem Lampeneinbau, ein Wendelbild neben der Wendel entsteht. Dieser Einfluß der Exzentrizität start jedoch dann nicht, wenn die Lichtaustrittsspalte S1, S2 im Zylinderspiegel Z so breit sind, daß Wendel und Wendelbild auf die gleiche abzutastende Stelle des Objekts leuchten können.

## Patentansprüche

1. Beleuchtungseinrichtung für elektrooptische Abtaster zur Ausleuchtung langgestreckter flacher Objekte unter Verwendung einer im Inneren eines Zylinderspiegels koaxial angeordneten Lichtquelle, deren Lichtstrahlen so aus dem Zylinderspiegel austreten, daß sie das Objekt mittels auf dem Objekt (OB) zusammentreffender direkter Lichtstrahlen (BS1) und an einem Planspiegel (P) umgelenkter, indirekter Lichtstrahlen (BS2) streifenweise ausleuchten, **dadurch gekennzeichnet**, daß für die Lichtstrahlen (BS1) zur direkten Objektausleuchtung ein erster Längsspalt (S1) im Zylinderspiegel (Z) vorgesehen ist, daß für die indirekten, über den im Strahlengang angeordneten Planspiegel (P) umgelenkten Lichtstrahlen (BS2) ein zweiter Längsspalt (S2) im Zylinderspiegel (Z) vorgesehen ist, daß die Breite des zweiten Längsspalts (S2) größer gewählt ist als die Breite des ersten Längsspalts (S1) und daß die Breite der Längsspalte (S1,S2) jeweils zu den beiden Enden hin zunimmt.

2. Beleuchtungseinrichtung nach Anspruch 1, **dadurch gekennzeichnet**, daß die reflektierenden Spiegelschichten des Zylinderspiegels (Z) und/oder wärmereflektierende Filterschichten entlang der beiden Längsspalte (S1,S2) unmittelbar auf der Mantelfläche eines zylindrisch ausgebildeten Glaskolbens (K) der Lichtquelle (W) aufgetragen sind.

3. Beleuchtungseinrichtung nach einem der Ansprüche 1 oder 2, **dadurch gekennzeichnet**, daß die reflektierenden Spiegelschichten des Zylinderspiegels (Z) als diffus reflektierende oder als retroreflektierende Schicht ausgebildet sind.

4. Beleuchtungseinrichtung nach einem der vorhergehenden Ansprüche, **dadurch gekennzeichnet**, daß der Zylinderspiegel (Z) aus zwei Teilschalen besteht, die längs einer Zylindermantellinie klappbar miteinander verbunden sind.

## Claims

1. Lighting apparatus for electro-optical scanners for illuminating elongated flat objects by using a light source which is coaxially arranged in the interior of a cylindrical reflector, the light rays of which emerge from the cylindrical reflector in such a way that they illuminate the object strip by strip by means of direct light rays (BS1) which coincide on the object (OB) and indirect light rays (BS2) which are deflected at a plane reflector (P), characterised in that a first longitudinal gap (S1) is provided in the cylindrical reflector (2) for the light rays (BS1) for direct illumination of the object, in that a second longitudinal gap (S2) is provided in the cylindrical reflector (Z) for the indirect light rays (BS2) which are deflected via the plane reflector (P) arranged in the beam path, in that the width of the second longitudinal gap (S2) is selected to be greater than the width of the first longitudinal gap (S1) and in that the width of the longitudinal gaps (S1, S2) in each case increases towards the two ends.

2. Lighting apparatus according to Claim 1, characterised in that the reflecting mirror layers of the cylindrical reflector (Z) and/or heat-reflecting filter layers along the two longitudinal gaps (S1, S2) are directly applied to the lateral surface of a cylindrically constructed glass tube (R) of the light source (W).

3. Lighting apparatus according to one of Claims 1 or 2, characterised in that the reflecting mirror layers of the cylindrical reflector (Z) are constructed as diffusely reflecting or as retro-reflecting layer.

4. Lighting apparatus according to one of the preceding claims, characterised in that the cylindrical reflector (Z) consists of two part-shells which are foldably joined to one another along a lateral cylinder surface line.

## Revendications

1. Dispositif d'éclairage pour des dispositifs de balayage électro-optique pour l'éclairement d'objets plats et oblongs moyennant l'utilisation d'une source de lumière, qui est disposée coaxialement à l'intérieur d'un miroir cylindrique et dont les rayons lumineux sortent du miroir cylindrique de manière à éclairer l'objet selon des bandes au moyen de rayons lumineux directs (BS1) et de rayons lumineux indirects (BS2), renvoyés par un miroir plan (P), les rayons lumineux directs et indirects se rencontrant sur l'objet (B), caractérisé par le fait qu'une première fente longitudinale (S1) pour les rayons lumineux (BS1) servant à éclairer directement l'objet est prévue dans le miroir cylindrique (Z), qu'une seconde fente longitudinale (S2), pour les rayons lumineux indirects (BS2) renvoyés par le miroir plan (P) disposé dans le trajet du rayonnement, est prévue dans le miroir cylindrique (Z), que la largeur de la seconde fente longitudinale (S2) est choisie supérieure à la largeur de la première fente longitudinale (S1) et que la largeur des fentes longitudinales (S1,S2) augmente respectivement en direction des deux extrémités.

2. Dispositif d'éclairage suivant la revendication 1, caractérisé par le fait que les couches réfléchissantes du miroir cylindrique (Z) et/ou les couches filtrantes réfléchissant la chaleur sont déposées le long des deux fentes longitudinales (S1,S2), directement sur la surface enveloppe d'une ampoule en verre (K) de forme cylindrique de la source de lumière (W).

3. Dispositif d'éclairage suivant l'une des revendications 1 ou 2, caractérisé par le fait que les couches réfléchissantes du miroir cylindrique (Z) sont réalisées sous la forme d'une couche réalisant une réflexion diffuse et d'une couche rétroréfléchissante.

4. Dispositif d'éclairage suivant l'une des revendications précédentes, caractérisé par le fait que le miroir cylindrique (Z) est formé de deux coques partielles, qui sont reliées entre elles, d'une manière rabattable, le long d'une génératrice de l'enveloppe cylindrique.

# FIG 1

# FIG 2